Europäisches Patentamt

European Patent Office

Office européen des brevets

(11) Numéro de publication: **0177985 B1**

(12) **FASCICULE DE BREVET EUROPEEN**

(45) Date de publication du fascicule du brevet:
14.06.89

(21) Numéro de dépôt: 85201305.1

(22) Date de dépôt: 14.08.85

(51) Int. Cl.⁴: **A 01 N 65/00, A 01 N 63/02**

(54) Produit antiseptique et procédé de fabrication de ce produit.

(30) Priorité: 17.09.84 CH 4445/84

(43) Date de publication de la demande:
16.04.86 Bulletin 86/16

(45) Mention de la délivrance du brevet:
14.06.89 Bulletin 89/24

(84) Etats contractants désignés:
AT BE DE FR GB IT LU NL SE

(56) Documents cités:
DE-B- 1 101 118
US-A- 3 812 272
US-A- 4 382 886

CHEMICAL ABSTRACTS, vol. 95, no. 17, 26 octobre
1981, page 513, réf. no. 148881v, Columbus, Ohio, US; E.
ENTANI: "Microbicidal effect of awasezu (processed
vinegar)"
COMPTES RENDUS HEBDOMADAIRES DES SEANCES
DE L'ACADEMIE DES SCIENCES, vol. 256, no. 8, 18
février 1963, pages 1858-1860, Montreuil, FR; P. LAVIE:
"Sur l'identification des substances antibactériennes
présentes dans le miel"

Le dossier contient des informations techniques
présentées postérieurement au dépôt de la demande et
ne figurant pas dans le présent fascicule.

(73) Titulaire: **Tabord, Jacques-Ami, Route de Féchy,
CH-1165 Allaman (CH)**

(72) Inventeur: **Tabord, Jacques-Ami, Route de Féchy,
CH-1165 Allaman (CH)**

(74) Mandataire: **Meylan, Robert Maurice et al, c/o BUGNION
S.A. 10, route de Florissant Case Postale 375,
CH-1211 Genève 12 - Champel (CH)**

## Description

La présente invention a pour objet un produit antiseptique à base de matières premières naturelles.

A ce jour, il n'existe pas sur le marché d'antiseptique à base de matières premières naturelles, à l'exception de la teinture de propolis administrée surtout par voie orale.

L'invention a pour but de réaliser un produit antiseptique à base de matières premières naturelles non toxiques et susceptibles d'être utilisées sous diverses formes et d'une manière très étendue.

On connaît depuis des millénaires l'effet antiseptique du vinaigre de vin et son effet bactéricide est cité dans la littérature moderne (Chemical Abstracts, Vol. 95, N° 17, 26 octobre 1981, page 513, réf. N° 148881 v) en combinaison avec du NaCl ou du glucose.

De même la valeur thérapeutique du miel est connue depuis des millénaires mais les recherches modernes n'ont fait que chercher à identifier les agents antibactériens du miel (Comptes rendus hebdomadaires des séances de l'Académie des Sciences, Vol. 256, N° 8, 18.02.1963, pages 1858–1860, Montreuil, FR; P. Lavie «Sur l'identification des substances antibactériennes dans le miel»).

Quant à la valeur thérapeutique du propolis, elle est également connue depuis l'Antiquité et son usage empirique s'est maintenu jusqu'à nos jours. Les recherches faites sur sa composition présentent une grande complexité et il est impossible de standardiser les compositions. Un procédé d'extraction de propolis est décrit dans le document US-A 4 382 886. L'extrait de propolis obtenu est une poudre hydrosoluble. Or l'extrait de propolis hydrosoluble a généralement été considéré comme ne possédant que de modestes propriétés antimicrobiennes.

Quant aux propriétés antiseptiques de l'alcool éthylique ou éthanol, elles sont bien connues et son usage est encore très répandu dans la médecine populaire.

Si les produits ci-dessus ont fait l'objet de nombreuses études, personne jusqu'ici n'a proposé de les utiliser en combinaison pour obtenir un produit antiseptique. Les mélanges connus ont un but différent. On a ainsi déjà proposé de mélanger, à volume égal, du miel et du vinaigre, dilués dans l'eau, pour réaliser un additif pour boissons alcoolisées dans le but de neutraliser l'odeur d'alcool de l'haleine du consommateur (US-A 3 812 272). Il a également été proposé d'utiliser un mélange contenant du miel et un acide comestible, tel que du vinaigre, pour la conservation de fruits et légumes (DE-A 1 101 118).

L'invention a pour objet l'obtention d'un produit antiseptique d'efficacité élevée par la combinaison des produits naturels susmentionnés.

Le produit antiseptique selon l'invention est caractérisé en ce qu'il est constitué essentiellement d'extraits de vinaigre de vin et de miel. Dans la mesure du possible il est judicieux d'ajouter au mélange de l'extrait de propolis.

Les tests microbiologiques, toxicologiques et dermatologiques ont en outre démontré:

– que les préparations selon l'invention ont un effet équivalent aux antiseptiques à base de matière synthétique;
– qu'elles sont non toxiques;
– qu'elles sont bien tolérées; et
– qu'elles ont des propriétés dermatophiles puisqu'elles ont un pH physiologiquement semblable à celui de la peau, ce qui a pour effet de stimuler les mécanismes naturels de défense;
– qu'elles ont un puissant effet bactéricide, tuberculicide et fongicide.

En ajoutant des ingrédients appropriés tels que glycérine, arômes, colorants naturels, tensioactifs, émulsifiants et huiles végétales, il est possible de réaliser des produits antiseptiques se présentant sous diverses formes telles que lotions antiseptiques, teinture antiseptique, teinture antiseptique préopératoire, mouchoirs aseptiques, shampoings et crèmes aseptiques.

Dans le cas de lotions, de teintures et de mouchoirs aseptiques, les effets susmentionnés sont déjà reconnaissables au bout de 30 secondes. Pour les shampoings et les crèmes aseptiques, on a constaté un effet bactéricide et fongicide qui se manifeste dans un laps de temps allant de 30 secondes à 8 minutes. Le propolis a en outre un effet curatif.

L'invention a également pour objet un procédé de fabrication du produit antiseptique, selon lequel on extrait le vinaigre de vin et le miel par filtration, la proportion de vinaigre de vin et de miel étant de 30:1.

Le produit antiseptique selon l'invention et son procédé de fabrication sont illustrés ci-après au moyen d'exemples.

Exemple I

On extrait du vinaigre de vin et du miel à une température ambiante dans de l'alcool éthylique à 70° pendant une heure. La proportion optimale du vinaigre de vin et du miel est de 30:1. Par filtrage, on obtient un extrait d'alcool clair.

On prépare une teinture de propolis à 10% par extraction à température ambiante de l'alcool éthylique à 70° et on ajoute la teinture de propolis obtenue à l'extrait de vinaigre de vin et de miel.

On rappellera ici que l'alcool éthylique ou éthanol est un produit naturel dont les propriétés antiseptiques sont connues depuis longtemps.

La solution doit contenir 20 à 50 g d'acide acétique et 0,50 à 1,00 g de propolis par litre.

On ajoute ensuite des ingrédients spécifiques tels que glycérine, parfums, colorants.

Les solutions finales doivent être claires ou très légèrement opalescentes.

Exemple II

On extrait le vinaigre de vin et le miel comme dans l'exmple I.

L'extrait d'alcool clair du vinaigre de vin et du miel est dilué dans de l'alcool éthylique et à 70°, de sorte que la solution contient 20 à 50 g d'acide acétique par litre.

On ajoute ensuite les ingrédients spécifiques tels que glycérine, parfums, colorants, pour chacune des préparations.

Les solutions finales doivent être claires ou très légèrement opalescentes.

**Exemple III**

On extrait le miel dans du vinaigre de vin en faisant fondre entièrement le miel dans le vinaigre de vin, à la température ambiante. La proportion du miel et du vinaigre doit être de 1:30 et le mélange total doit contenir environ 5% d'acide acétique.

Par filtrage on obtient un extrait clair utilisé pour la préparation de shampoings et de crèmes aseptiques.

A cet effet on ajoute de l'eau distillée et d'autres ingrédients spécifiques tels que tensioactifs, émulsifiants, huiles végétales, parfums, la concentration d'acide acétique étant adaptée pour être de 50 à 75 g/kg dans les préparations.

Dans le mélange ainsi préparé, on ajoute de l'extrait purifié de propolis, telle sorte que sa teneur soit de 1,0 à 2,0 g/kg, sous forme de substance sèche.

**Revendications**

1. Produit antiseptique, caractérisé par le fait qu'il est constitué essentiellement d'extraits de vinaigre de vin et de miel.

2. Produit antiseptique selon la revendication 1, caractérisé par le fait que les extraits de vinaigre de vin et de miel sont dilués dans de l'alcool éthylique à 70° et que la solution contient 20 à 50 g d'acide acétique par litre.

3. Produit antiseptique selon la revendication 1, caractérisé par le fait que le mélange essentiel contient en outre de l'extrait de propolis.

4. Produit antiseptique selon la revendication 3, caractérisé par le fait que les extraits sont dilués dans de l'alcool éthylique à 70° et que la solution contient 20 à 50 g d'acide acétique et 0,50 à 1,00 g de propolis par litre.

5. Produit antiseptique selon la revendication 3, caractérisé par le fait qu'il contient 1,00 à 2,00 g de propolis, sous forme de substance sèche, par kilo.

6. Produit antiseptique selon l'une quelconque des revendications 1 à 5, caractérisé par le fait qu'il est en outre constitué d'au moins un autre ingrédient tel que glycérine, parfum, colorant, tensioactif, émulsifiant, huile végétale.

7. Procédé de fabrication d'un produit antiseptique selon la revendication 1, caractérisé en ce qu'on extrait le vinaigre de vin et le miel par filtration, la proportion de vinaigre de vin et de miel étant de 30:1.

8. Procédé selon la revendication 7, caractérisé en ce qu'on extrait d'une part le vinaigre de vin et le miel, à la température ambiante, dans de l'alcool éthylique à 70° et filtre de manière à obtenir un alcool clair, qu'on extrait d'autre part du propolis dans de l'alcool éthylique à 70° à la température ambiante, additionne l'extrait de propolis au filtrat clair de l'extrait de vinaigre et de miel, de sorte que la solution contienne 20 à 50 g d'acide acétique et 0,50 à 1,00 g de propolis par litre et qu'on ajoute des ingrédients spécifiques.

9. Procédé selon la revendication 7, caractérisé en ce qu'on extrait le vinaigre de vin et le miel dans de l'alcool éthylique à 70°. Pendant une heure à température ambiante, filtre, puis ajoute de l'alcool éthylique à 70° au filtrat clair de sorte que la solution contienne 20 à 50 g d'acide acétique par litre, puis ajoute des ingrédients spécifiques.

10. Procédé selon la revendication 7, caractérisé en ce qu'on extrait le miel dans du vinaigre de vin contenant 5% d'acide acétique, à température ambiante, filtre le mélange et additionne au filtrat clair de l'eau distillée et des ingrédients spécifiques, de telle sorte que la concentration totale d'acide acétique soit de 50 à 75 g par kilo et qu'on ajoute de l'extrait purifié de propolis, de sorte que sa teneur soit de 1,0 à 2,0 g par kilo de dispersion ainsi obtenue.

**Patentansprüche**

1. Antiseptisches Produkt, dadurch gekennzeichnet, dass es im wesentlichen aus Weinessig- und Honig-Extrakten besteht.

2. Antiseptisches Produkt nach Anspruch 1, dadurch gekennzeichnet, dass die Weinessig- und Honig-Extrakte in Äthylalkohol von 70° verdünnt sind und dass die Lösung 20 bis 50 g Essigsäure je Liter enthält.

3. Antiseptisches Produkt nach Anspruch 1, dadurch gekennzeichnet, dass die wesentliche Mischung ausserdem Bienenharz-Extrakt enthält.

4. Antiseptisches Produkt nach Anspruch 3, dadurch gekennzeichnet, dass die Extrakte in Äthylalkohol von 70° verdünnt sind und dass die Lösung 20 bis 50 g Essigsäure und 0,50 bis 1,00 g Bienenharz je Liter enthält.

5. Antiseptisches Produkt nach Anspruch 3, dadurch gekennzeichnet, dass es 1,00 bis 2,00 g Bienenharz, in Form trockener Substanz, je Liter enthält.

6. Antiseptisches Produkt nach einem der Ansprüche 1 bis 5, dadurch gekennzeichnet, dass es ausserdem aus wenigstens einem anderen Ingrediens, wie Glyzerin, einem Parfüm, einem Farbstoff, einem oberflächenaktiven Stoff, einem Emulgierungsmittel, einem pflanzlichen Öl, besteht.

7. Verfahren zur Herstellung eines antiseptischen Produkts nach Anspruch 1, dadurch gekennzeichnet, dass man den Weinessig und den Honig durch Filtrieren extrahiert, wobei das Verhältnis von Weinessig zu Honig 30:1 beträgt.

8. Verfahren nach Anspruch 7, dadurch gekennzeichnet, dass man einerseits den Weinessig und den Honig bei Umgebungstemperatur in Äthylalkohol von 70° extrahiert und derart filtriert, dass man einen klaren Alkohol erhält, dass man andererseits Bienenharz in Äthylalkohol von 70° bei Umgebungstemperatur extrahiert, den Bienenharz-Extrakt dem klaren Filtrat des Essig- und Honig-Extrakts zufügt, derart, dass die Lösung 20 bis 50 g Essigsäure und 0,50 bis 1,00 g Bienenharz je Liter enthält, und dass man spezifische Ingredienzen zufügt.

9. Verfahren nach Anspruch 7, dadurch gekennzeichnet, dass man den Weinessig und den Honig in Äthylalkohol von 70° während einer Stunde bei Umgebungstemperatur extrahiert, filtriert, dann Äthylalkohol von 70° zum klaren Filtrat zufügt, derart, dass die Lösung 20 bis 50 g Essigsäure je Liter enthält, und danach spezifische Ingredienzen zufügt.

10. Verfahren nach Anspruch 7, dadurch gekennzeichnet, dass man den Honig in 5% Essigsäure enthaltendem Weinessig bei Umgebungstemperatur extrahiert, die Mischung filtriert und zum klaren Filtrat destilliertes Wasser und spezifische Ingredienzen zufügt, derart, dass die Gesamtkonzentration an Essigsäure 50 bis 75 g je Kilo beträgt, und dass man gereinigten Bienenharz-Extrakt zufügt, derart, dass sein Gehalt 1,0 bis 2,0 g je Kilo der so erhaltenen Dispersion beträgt.

## Claims

1. An antiseptic product, characterized by the fact that it consists essentially of extracts of wine vinegar and honey.

2. An antiseptic product according to claim 1, characterized by the fact that the extract of wine vinegar and honey are diluted in 70° ethyl alcohol and that the solution contains 20 to 50 g of acetic acid per litre.

3. An antiseptic product according to claim 1, characterized by the fact that the essential mixture contains in addition extract of propolis.

4. An antiseptic product according to claim 3, characterized by the fact that the extracts are diluted in 70° ethyl alcohol and that the solution contains 20 to 50 g of acetic acid and 0,50 to 1,00 of propolis per litre.

5. An antiseptic product according to claim 3, characterized by the fact that it contains 1,00 to 2,00 g of propolis in the form of a dry substance per kilogramme.

6. An antiseptic product according to any one of claims 1 to 5, wherein it consists in addition of at least one other ingredient such as glycerine, perfume, colourant, tensioactive agent, emulsifier or vegetable oil.

7. A method of manufacturer of an antiseptic product according to claim 1, characterized by the fact that the wine vinegar and the honey are extracted by filtration, the proportion of wine vinegar to honey being 30:1.

8. A method according to claim 7, characterized by the fact that firstly the wine vinegar and the honey are extracted at the ambient temperature in 70° ethyl alcohol and filtered so as to obtain a clear alcohol, that secondly the propolis is extracted in 70° ethyl alcohol at the ambient temperature, the extract of propolis is mixed with the clear filtrate of the extract of vinegar and honey, so that the solution contains 20 to 50g of acetic acid and 0,50 to 1,00 g of propolis per litre and that the specific ingredients are added.

9. A method according to claim 7, characterized by the fact that the wine vinegar and the honey are extracted in 70° ethyl alcohol for one hour at ambient temperature and filtered and then 70° ethyl alcohol is added to the clear filtrate so that the solution contains 20 to 50 g of acetic acid per litre, and the specific ingredients are then added.

10. A method according to claim 7, characterized by the fact that the honey is extracted in wine vinegar containing 5% of acetic acid at ambient temperature and the mixture is filtered and mixed with the clear filtrate of distilled water and of the specific ingredients so that the total concentration of acetic acid is from 50 to 75 g per kilogramme and that purified extract of propolis is added so that its content is from 1,0 to 2,0 g per kilogramme of dispersion thus obtained.